# EUROPÄISCHE PATENTSCHRIFT

(11) **EP 3 216 659 B1**
(45) Veröffentlichungstag und Bekanntmachung des Hinweises auf die Patenterteilung: **21.08.2019**
(21) Anmeldenummer: 17159628.1
(22) Anmeldetag: 07.03.2017
(51) Int. Cl.: B60R 25/24, B60R 25/20, G06Q 30/06, G07F 17/00, A01B 79/00

(54) **ANORDNUNG ZUR KONTROLLE VON FUNKTIONEN EINER ARBEITSMASCHINE**
ASSEMBLY FOR MONITORING FUNCTIONS OF A WORKING MACHINE
SYSTÈME DE CONTRÔLE DES FONCTIONS D'UN ENGIN DE TRAVAIL

(30) Priorität: 08.03.2016 DE 102016203715
(43) Veröffentlichungstag der Anmeldung: 13.09.2017
(73) Patentinhaber: Deere & Company, Moline, IL 61265 (US)
(72) Erfinder: Gresch, Valentin, 68163 Mannheim (DE)
(74) Vertreter: Holst, Sönke

(56) Entgegenhaltungen:
- EP-A1- 1 583 041
- EP-A1- 2 144 206
- WO-A1-2015/176826
- DE-A1- 19 714 556
- DE-A1- 19 913 971
- US-B2- 6 998 956

## Beschreibung

Die Erfindung betrifft eine Anordnung zur Kontrolle des Freischaltens von Funktionen einer Arbeitsmaschine.

### Technologischer Hintergrund

In der Vergangenheit wurden Arbeitsmaschinen, insbesondere für die Landwirtschaft, mit immer komplexeren Funktionen versehen, wie automatischen Lenksystemen, Vorgewendemanagement oder ortsspezifischen Ansteuerungen von Anbaugeräten. Dieser Trend wird sich auch in Zukunft fortsetzen.

Die meisten dieser Funktionen beruhen auf Software. Diese Software wird im Stand der Technik in vielen Fällen bereits bei der Auslieferung der Arbeitsmaschine oder nachträglich installiert und ist ohne weitere Maßnahmen aktivierbar, sodass jeder Benutzer, der über einen Schlüssel für die Arbeitsmaschine verfügt, die Software auch benutzen kann, unabhängig davon, ob er eine entsprechende Einweisung oder Ausbildung erhalten hat. Ein Beispiel für eine derartige Software wäre ein Vorgewendemanagement eines Traktors.

Für manche Arten von Software für Arbeitsmaschinen ist eine zusätzliche, temporäre Freischaltung durch den Software-Anbieter vorgesehen (vgl. DE 199 13 971 A1). Derartige Software nutzt üblicherweise externe, kostenpflichtige Ressourcen, wie Datennetzwerke oder Satelliten. Zur Freischaltung der Software füllt der Besitzer der Arbeitsmaschine nach dem derzeitigen Stand der Technik ein Formular aus und sendet es per Post oder Fax an den Anbieter. Nach Überweisung eines vorgesehenen Betrags erhält der Besitzer der Arbeitsmaschine ein Passwort, das er in eine Bedienerschnittstelle der Arbeitsmaschine eingeben kann, um die gewünschte Software nutzen zu können. Die Nutzungsdauer der Software kann im Formular ausgewählt und auf Zeiträume von einen oder mehreren Monaten begrenzt werden, sodass dieser Vorgang nach Zeitablauf zu wiederholen ist. Auf diese Weise kann eine Freischaltung für eine spezielle Software und die zugehörige Funktion für eine spezielle Maschine vorgenommen werden. Hier erfolgt somit eine monetäre Zahlung für Funktionen auch dann, wenn diese nicht benötigt werden, denn längst nicht bei allen Arbeitsvorgängen der Arbeitsmaschine ist die kostenpflichtig freizuschaltende Software (im Beispiel der DE 199 13 971 A1 zur pflanzenzustandsgesteuerten Ansteuerung einer Düngemaschine) vonnöten. Soll die Software auf einer anderen Maschine genutzt werden, ist eine zweite, kostenpflichtige Freischaltung erforderlich.

Es wurde auch vorgeschlagen (DE 197 14 556 A1, WO 2015/176826 A1), den Bedienern von Arbeitsmaschinen individuelle Schlüssel zuzuordnen, die mit zugehörigen, elektronischen Identifikatoren ausgestattet sind. Der Inhaber des Schlüssels hat Zugang zu allen ihm freigegebenen Maschinen eines Maschinenparks. Beim Einstecken des Schlüssels in das Schloss der Arbeitsmaschine erkennt deren lokaler Prozessor den Identifikator und übersendet ihn an einen Zentralprozessor. Der Zentralprozessor liest anhand des Identifikators eine Berechtigungszuordnungstabelle aus und sendet an den lokalen Prozessor zurück, welche Berechtigungen dem Inhaber des Schlüssels zugeordnet sind. Auf diese Weise besteht die Möglichkeit, dem Inhaber des Schlüssels seiner Berechtigungen entsprechende Funktionen der Maschine zur Verfügung zu stellen. So kann einem Fahrer ohne Maschinenlizenz nur das Fahren freigegeben werden oder einem Mechaniker ohne Fahrerlaubnis nur ein Wartungsbetrieb ermöglicht werden. Außerdem werden anhand des Identifikators bedienerspezifische Einstellungen der Arbeitsmaschine abgerufen und Benutzungsdaten der Maschine an den Zentralprozessor übersandt, damit dieser Abrechnungen für geleistete Arbeiten erstellen kann. Die Berechtigungszuordnungstabelle wird durch eine Bedienstation am Zentralprozessor gepflegt. Falls somit ein neuer Fahrer seine Stelle bei einem Lohnunternehmer antritt, würde dem Fahrer ein Schlüssel mit zugehörigen Identifikator ausgehändigt und an der Bedienstation die Berechtigungszuordnungstabelle aktualisiert. Die Freischaltung erfolgt zeitlich unbegrenzt, bis die Berechtigungszuordnungstabelle aufgrund von Änderungen im Arbeitsverhältnis o.ä. aktualisiert und die Berechtigung des Fahrers geändert oder widerrufen wird. Hier ist demnach ein relativ großer Aufwand, nämlich eine Kontaktaufnahme mit der Bedienstation, vonnöten, um Berechtigungen zu ändern. Eine schnelle Änderung der einem Fahrer erlaubten Funktionen ist nicht möglich.

Es wurde auch vorgeschlagen, den Schlüssel mit Identifikationsdaten zu programmieren, die durch eine Steuerung des Fahrzeugs ausgelesen und mit einer lokalen Datenbank verglichen werden. Dabei wird direkt im Schlüssel festgelegt, welche Berechtigung ihm zugeordnet ist (EP 1 583 041 A1, US 6 998 956 B2), was die im vorhergehenden Absatz erwähnten Nachteile hat, oder es wird bei der Herstellung oder Übergabe ein Abgleichdatenspeicher des Fahrzeugs zur Erkennung des Schlüssels eines Benutzers programmiert (EP 2 144 206 A1), sodass der Abgleichdatenspeicher anschließend anhand des Schlüssels die Berechtigung des Fahrers zur Nutzung bestimmter Funktionen des Fahrzeugs erkennt. Hier können nach Freischaltung des Fahrzeugs durch einen autorisierten Benutzer auch Autorisierungen für die Schlüssel weiterer Benutzer in den Abgleichspeicher eingetragen werden. Hierzu muss sich jedoch der autorisierte Benutzer zum Fahrzeug begeben, was relativ umständlich sein kann, wenn das Fahrzeug beispielsweise an einer Zweigniederlassung stationiert ist. Zudem ist nach der Freischaltung des Schlüssels des weiteren Benutzers die ihm zugeordnete Funktion stets aktiviert, auch wenn er sie nicht benötigen sollte.

### Aufgabe

Die vorliegende Erfindung hat sich zur Aufgabe gesetzt, eine Anordnung zur Kontrolle von Funktionen einer Arbeitsmaschine bereitzustellen, bei der die erwähnten Nachteile ganz oder zumindest teilweise vermieden werden.

### Erfindung

Die vorliegende Erfindung wird durch die Patentansprüche definiert.

Eine Anordnung zur Kontrolle von Funktionen einer Arbeitsmaschine umfasst ein elektronisch (aus- )lesbares Identifikationsmittel, das einem Bediener der Arbeitsmaschine zugeordnet ist, eine durch den Bediener betätigbare Bedienerschnittstelle, einen einer Arbeitsmaschine zugeordneten, mit der Bedienerschnittstelle verbundenen oder verbindbaren Prozessor, und wenigstens eine Einrichtung der Arbeitsmaschine und/oder eines der Arbeitsmaschine zugehörigen Geräts, deren Funktion durch den Prozessor ein- und ausschaltbar ist. Der Prozessor ist programmiert, das Identifikationsmittel auszulesen und über die Bedienerschnittstelle eine Eingabe und/oder Auswahl einer gewünschten Funktion der Einrichtung zu erhalten. Der Prozessor schaltet die eingegebene und/oder ausgewählte, gewünschte Funktion der Einrichtung für eine begrenzte, festgelegte oder mittels der Bedienerschnittstelle spezifizierbare Zeitdauer frei, falls in einer abgespeicherten Berechtigungsdatenbank eine dem Identifikationsmittel zugeordnete Berechtigung zur Nutzung (und somit zur Freischaltung) einer Funktion einer Einrichtung der Arbeitsmaschine und/oder des Geräts eingetragen ist, sodass die gewünschte Funktion anschließend durch den Benutzer genutzt werden kann. Dabei können dem Bediener entweder nur ihm gemäß der Berechtigungsdatenbank zugeordnete Funktionen zur Auswahl angeboten werden oder zusätzlich darüber hinausgehende Funktionen. Im zweiten Fall wird nach der Auswahl geprüft, ob die Berechtigung für die Funktion vorliegt.

Mit anderen Worten identifiziert sich der Bediener durch das Identifikationsmittel gegenüber dem Prozessor der Arbeitsmaschine. Anhand einer Berechtigungsdatenbank wird geprüft, ob der Bediener berechtigt ist, eine oder mehrere, bestimmte Funktionen wenigstens einer Einrichtung der Arbeitsmaschine und/oder deren Geräts zu nutzen. Ist das der Fall, kann der Bediener mittels der Bedienerschnittstelle auswählen oder eingeben, welche der ihm zugeordnete(n) Funktion(en) der Arbeitsmaschine und/oder des Geräts er gerade benutzen möchte. Diese Funktion schaltet der Prozessor dann frei und der Bediener kann sie benutzen. Auf diese Weise erfolgt ein temporäres Freischalten nur für wirklich benötigte Funktionen für eine gewisse, fest vorgegebene oder eingegebene Zeitdauer, bei der es sich beispielsweise um Stunden, halbe oder ganze Tage handeln kann.

Die Berechtigungsdatenbank ist auf einem von der Arbeitsmaschine beabstandeten Zentralrechner abgespeichert, der mit dem Prozessor in drahtloser, bidirektionaler Kommunikationsverbindung steht. Der Prozessor ist programmiert, an den Zentralrechner einen Datensatz hinsichtlich der ausgewählten Funktion und ggf. der spezifizierten Zeitdauer zu übersenden und der Zentralrechner ist programmiert, anhand des empfangenen Datensatzes Abrechnungsdaten für die ausgewählte Freischaltung zu erstellen. Diese Abrechnungsdaten können z.B. monatlich per Rechnung an den Bediener oder Besitzer der Arbeitsmaschine geschickt werden oder sie werden direkt von einem beliebigen (z.B. Giro-, Kreditkarten- oder Paypal-) Konto des Bedieners oder Besitzers der Arbeitsmaschine abgebucht.

Anhand der Freischaltung kann eine genauere Abrechnung der tatsächlich genutzten oder zur Verfügung gestellten Funktionen als bei der bisher gebräuchlichen, langfristigen Freischaltung von Software erfolgen. Diese Vorgehensweise eignet sich beispielsweise dann, wenn die Arbeitsmaschine sich nicht im Eigentum des Besitzers oder Bedieners befindet, sondern nur von einem Anbieter (z.B. Verleiher oder Händler) gemietet ist, denn dann kann der Vermieter als Betreiber des Zentralrechners und Pfleger der Berechtigungsdatenbank die Arbeitsmaschine zu einem relativ niedrigen Grundpreis anbieten und eine der tatsächlichen Nutzung angemessenere Abrechnung durchführen. Gleiches gilt, wenn der Bediener oder Besitzer die Maschine gekauft hat, denn dann kann der Hersteller oder Händler als Betreiber des Zentralrechners und Pfleger der Berechtigungsdatenbank sie zu einem relativ niedrigen Grundpreis verkaufen und erhält später eine der tatsächlichen Nutzung angepasste, zusätzliche Vergütung.

Der Prozessor mit kann einem lokalen Speicher verbunden werden, auf dem eine lokale Kopie der Berechtigungsdatenbank abgelegt ist.

Das Auslesen der dem Identifikationsmittel zugeordneten Berechtigung aus der Berechtigungsdatenbank kann durch den Zentralrechner oder, insbesondere bei temporär (z.B. wenn sich die Arbeitsmaschine in einem per Funk nicht erreichbaren Gebiet aufhält) nicht verfügbarer Kommunikationsverbindung, durch den Prozessor erfolgen. Dieser greift dann auf die lokale Kopie der Berechtigungsdatenbank zurück, die von Zeit zu Zeit aktualisiert wird, insbesondere wenn die Kommunikationsverbindung wieder verfügbar ist. Es ist auch denkbar, dass diese lokale Kopie der Berechtigungsdatenbank oder zumindest deren den Bediener betreffenden Daten (in einer durch den Prozessor verifizierbaren Form, z.B. mit einem elektronischen Echtheitszertifikat versehen) auf einem mit dem elektronischen Identifikationsmittel fest verbundenen Speichermedium hinterlegt ist. Somit kann der Bediener die für Ihn freischaltbaren Funktionen auch dann nutzen, wenn er sich an einem Ort zum ersten Mal bei der Arbeitsmaschine anmeldet, an dem keine Kommunikationsverbindung zum Zentralrechner verfügbar ist.

In der Berechtigungsdatenbank können verschiedene Berechtigungsstufen abgelegt sein, wobei eine erste Berechtigungsstufe den Bediener autorisiert, eine oder mehrere bestimmte oder sämtliche vorhandenen Funktionen der Arbeitsmaschine direkt (d.h. ohne zusätzliche Prüfung durch eine externe Stelle) freizuschalten und eine zweite Berechtigungsstufe den Bediener nur autorisiert, über den Prozessor und/oder Zentralrechner eine Anfrage hinsichtlich einer vom Bediener eingegebenen und/oder ausgewählten, gewünschten Funktion an eine beabstandetes Ein- und Ausgabegerät zu übersenden und der Prozessor programmiert ist, die gewünschte Funktion nur dann freizuschalten, nachdem am beabstandete Ein- und Ausgabegerät eine positive Antwort eingegeben wurde. Das beabstandete Ein- und Ausgabegerät wird durch einen Berechtigten gehandhabt, z.B. einen Betriebsleiter oder Vorgesetzten des Bedieners. Die erste Berechtigungsstufe kann somit erfahrenen, zuverlässigen Bedienern der Arbeitsmaschine zugeordnet werden, die ohne Nachfrage oder Überprüfung ihnen zugeordnete Funktionen freischalten können. Die zweite Berechtigungsstufe kann weniger erfahrenen Bedienern, z.B. Aushilfskräften oder Auszubildenden zugeordnet werden, deren gewünschten Freischaltungen vorsorglich noch zu überprüfen sind. Es sind auch Kombinationen denkbar, in denen einem speziellen Bediener für einige Funktionen die erste Berechtigungsstufe zugeordnet ist und für andere Funktionen die zweite Berechtigungsstufe.

Einer zweiten Arbeitsmaschine kann ein zweiter Prozessor zugeordnet werden, der mit einer Bedienerschnittstelle und dem Zentralrechner verbunden oder verbindbar ist, sodass eine auf der ersten Arbeitsmaschine freigeschaltete Funktion durch das Identifikationsmittel auch auf der zweiten Arbeitsmaschine nutzbar ist. In diesem Fall wird die auf der (ersten) Arbeitsmaschine durchgeführte Freischaltung über den Zentralrechner auf die zweite Arbeitsmaschine übertragen und auf der ersten Arbeitsmaschine deaktiviert. Diese Vorgehensweise eignet sich für den Fall, dass die erste Arbeitsmaschine ausfällt. Bei einer anderen Ausführungsform bleibt die Freischaltung auf die erste Arbeitsmaschine beschränkt, auf welcher sie erfolgt ist. Weiterhin kann vorgesehen sein, dass bei Ausfall eines Bedieners (z.B. wegen Krankheit) eine Stornierung der freigeschalteten Funktion oder Übertragung auf einen anderen Bediener ermöglicht wird. Dazu kann der erste (oder zweite, ihn ersetzende) Bediener bei Bedarf eine entsprechende Eingabe in die Bedienerschnittstelle vornehmen.

Die Berechtigungsdatenbank kann durch eine berechtigte Person nach Eingabe einer Autorisierung unter Verwendung von Fernkommunikationsmitteln, insbesondere über eine Mobilfunk- oder Internet-Verbindung, änderbar sein. Es wird demnach festgelegt, wer berechtigt ist, die Berechtigungsdatenbank zu ändern. Dabei kann es sich beispielsweise um den Betriebsleiter eines landwirtschaftlichen (Lohn-) Unternehmens handeln. Auf diese Weise können neue Mitarbeiter relativ einfach und schnell die Berechtigung erhalten, Funktionen der Arbeitsmaschinen des Unternehmens zu nutzen. Es können durch die berechtigte Person auch andere Änderungen der Berechtigungsdatenbank durchgeführt werden, z.B. Löschung von Berechtigungen oder Zuordnung neuer Funktionen zu bestimmten Bedienern.

Die freischaltbare Funktion der Arbeitsmaschine kann eine oder mehrere der folgenden sein: automatisierte Lenkung der Arbeitsmaschine anhand eines satellitengestützten Navigationssystems mit oder ohne Korrektursignal, automatisierte Lenkung der Arbeitsmaschine mittels sensorisch erfasstem Pfad, Synchronisierung von Position und Weg mehrerer Arbeitsmaschinen, positionsbasierte Betätigung von Funktionen der Arbeitsmaschine und/oder des Geräts am Vorgewende, Traktor-Anbaugeräte-Automatisierung (z.B. nach der Norm ISO 11783) gemäß welcher das Gerät eine oder mehrere Funktionen des Traktors steuert, variable Applikationsraten, Reihensynchronisierung (d.h. eine Sämaschine wird derart angesteuert, dass das Saatgut quer zur Fahrtrichtung bei einer Überfahrt untereinander und mit bereits ausgebrachtem Saatgut in Querrichtung in einem vorgegebenen Muster ausgerichtet ist), Zugänglichkeit von physischen oder elektronischen Benutzer- und/oder Reparaturhandbüchern, Berechtigung zum online-Bestellen von Betriebsstoffen und/oder Ersatzteilen für die Arbeitsmaschine über die Bedienerschnittstelle, Teilbreiten- bzw. Einzelreihenschaltung basierend auf Karten und Informationen über die Fahrzeug bzw. Arbeitsgeräteposition, Zugang zu verschließbaren Behältnissen der Arbeitsmaschine, maximale Fahrgeschwindigkeit der Arbeitsmaschine auf dem Feld und/oder der Straße, geographischer Nutzungsbereich der Arbeitsmaschine, verfügbare Motorleistung der Arbeitsmaschine, Ingangsetzen des Motors der Arbeitsmaschine, Fahren der Arbeitsmaschine, benutzerspezifische Konfiguration von Bedienelementen und/oder des Arbeitsplatzes in der Arbeitsmaschine (z.B. Sitzeinstellung), Einschalten einer Klimaanlage, Einschalten von Unterhaltungselektronik an Bord der Arbeitsmaschine und/oder Einschalten von Kommunikationsmitteln der Arbeitsmaschine und/oder des Geräts, die eine Betätigung oder Aktivierung einer stationären Einrichtung, z.B. zum Öffnen und Schließen eines Tores oder zum Freischalten einer Betätigung einer Zapfsäule, ermöglichen, und/oder Einräumung einer Berechtigung der Identifikationsmittel für eine Betätigung oder Aktivierung einer (insbesondere der zuvor erwähnten) stationären Einrichtung.

Das elektronisch auslesbare Identifikationsmittel kann eines oder mehrere folgender sein: ein Speicherchip, ein körperliches Merkmal des Bedieners, wie beispielsweise sein Gesicht, Fingerabdruck oder seine Netzhaut, ein in die Bedienerschnittstelle eingebbares Passwort und/oder ein auf einem tragbaren Endgerät abgespeichertes Passwort oder andere dort abgespeicherte Daten, wie dessen Seriennummer.

### Ausführungsbeispiel

In den Zeichnungen ist ein nachfolgend näher beschriebenes Ausführungsbeispiel der Erfindung dargestellt, wobei die Bezugszeichen nicht zu einer einschränkenden Auslegung der Patentansprüche herangezogen werden dürfen. Es zeigt:
- Fig. 1: eine schematische Darstellung einer Ausführungsform einer Anordnung zur Kontrolle des Freischaltens von Funktionen einer Arbeitsmaschine,
- Fig. 2: ein Flussdiagramm für eine mögliche Vorgehensweise, nach welcher die Anordnung arbeitet, und
- Fig. 3: ein Beispiel für eine Anzeigeeinrichtung bei der Auswahl von Funktionen der Arbeitsmaschine.

### Aufbau der Anordnung

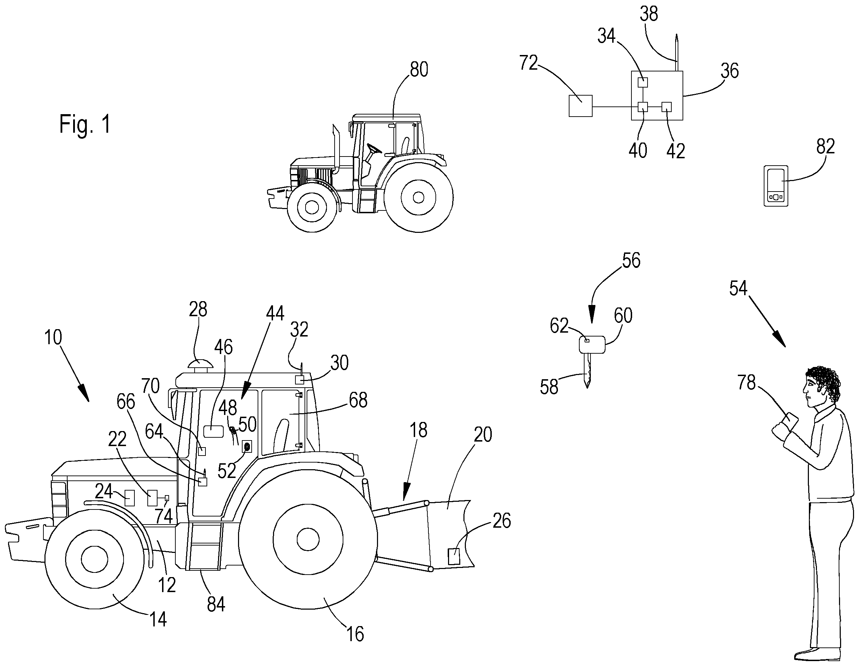

Die Figur 1 zeigt eine an sich bekannte Arbeitsmaschine 10 in Form eines Traktors, der sich auf einem Fahrgestell 12 aufbaut, das sich durch vordere, lenkbare Räder 14 und rückwärtige, angetriebene Räder 16 auf dem Erdboden abstützt. Über eine Geräteschnittstelle 18 ist ein Gerät 20 rückwärtig am Fahrgestell 12 trennbar angebunden.

Die Arbeitsmaschine 10 umfasst einen Prozessor 22, der es ermöglicht, bestimmte Funktionen der Arbeitsmaschine 10 und/oder des Geräts 20 ein- und auszuschalten, d.h. deren Betrieb zu ermöglichen oder unmöglich zu machen. Diese Funktionen können beispielsweise eine Lenkautomatik mit einem zugehörigen Steuergerät 24, das Signale von einem Satellitenempfänger 28 erhält und die Lenkung der vorderen Räder 14 entlang eines geplanten Weges bewerkstelligt oder von einer Steuerung 26 des Geräts 20 kontrollierte Funktionen des Geräts 20 sein, wie eine intelligente Steuerung des Auflagedrucks eines Bodenbearbeitungswerkzeugs.

Der Prozessor 22 ist mit einer Sende- und Empfangseinrichtung 30 verbunden, die mit einer Antenne 32 versehen ist. Die Sende- und Empfangseinrichtung 30 ermöglicht eine drahtlose, elektronische Kommunikation mit einer Sende- und Empfangseinrichtung 34 einer beabstandeten Station 36. Die Sende- und Empfangseinrichtung 34 ist mit einem Zentralrechner 40 verbunden, auf dem eine Berechtigungsdatenbank 42 abgespeichert ist.

Weiterhin ist der Prozessor 22 mit einer Bedienerschnittstelle 44 verbunden, die eine Anzeigeeinrichtung 46 und Eingabeelemente in Form eines Joysticks 48 mit Tasten 50 sowie einen Fingerabdrucksensor 52 umfasst.

Einem Bediener 54 ist ein Schlüssel 56 zugeordnet, der ein Gehäuse 60 mit einem Schlüsselbart 58 und einem im Gehäuse 60 eingebetteten, elektronischen Identifikationsmittel 62 in Form eines Transponderchips. Die Arbeitsmaschine 10 ist ihrerseits mit einem Sender und Empfänger 66 versehen, der einerseits mit dem Prozessor 22 und andererseits mit einer Antenne 64 verbunden ist, die mit dem Identifikationsmittel 62 des Schlüssels 56 zusammenwirken kann, wenn sich dieser in der Kabine 68 der Arbeitsmaschine 10 befindet und insbesondere dort in ein Zündschloss 70 eingesteckt ist. Eine lokale Kopie der Berechtigungsdatenbank 42 ist in einem mit dem Prozessor 22 verbundenen Speicher 74 abgelegt und wird regelmäßig anhand der Berechtigungsdatenbank über die Sende- und Empfangseinrichtungen 30, 34 aktualisiert.

### Wirkungsweise der Anordnung

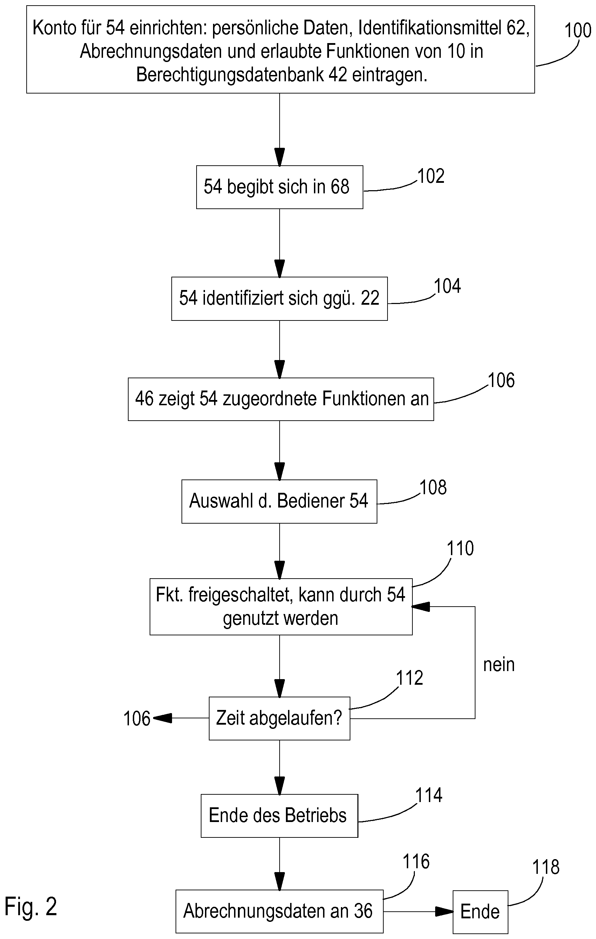

Die Figur 2 zeigt ein Flussdiagramm als Beispiel für eine mögliche Vorgehensweise, nach welcher die in der Figur 1 gezeigte Anordnung genutzt werden kann. In einem ersten Schritt 100 wird für den Bediener 54 in der Berechtigungsdatenbank 42 ein Konto errichtet, in dem persönliche Daten (Namen, Adresse etc.), Daten hinsichtlich des Identifikationsmittels 62, die dessen Identifikation ermöglichen (wie eine Seriennummer des Identifikationsmittels 62 oder ein darauf abgespeichertes, einzigartiges Passwort), Abrechnungsdaten (z.B. Rechnungsadresse oder Kontonummer) und die dem speziellen Bediener 54 eingeräumten Berechtigungen. Diese Kontoeinrichtung kann vor Ort an der beabstandeten Station 36 mittels einer Eingabestation 72 erfolgen, indem der Bediener 54 oder ein Verfügungsberechtigter der Arbeitsmaschine 10 sich dort einfindet oder per Post, Fax oder Email oder Internet ein ausgefülltes Formular an die beabstandete Station 36 übersendet, wo die Berechtigungsdatenbank 42 an der Eingabestation 36 durch einen Mitarbeiter gepflegt wird. Auch eine Online-Errichtung des Kontos über eine Internet-Verbindung durch den Bediener 54 oder einen Verfügungsberechtigten der Arbeitsmaschine 10 wäre denkbar. In jedem Fall können Mittel zur Prüfung der Berechtigung der die Eintragung oder Änderung in der Berechtigungsdatenbank 42 veranlassenden Person vorgesehen sein. Dazu kann jeder Arbeitsmaschine 10 ein Passwort zugeordnet sein, das der Berechtigte eingeben muss, um die Berechtigungsdatenbank ändern zu können.

Nachdem das Konto errichtet ist, kann der Bediener 54 sich nun mit dem Schlüssel 56 zur Arbeitsmaschine 10 begeben und dort (physisch) mit dem Schlüsselbart 58 oder dem über den Sender und Empfänger 66 auf beliebige physikalische Weise (z.B. Radiowellen, Nahfeldkommunikation, Infrarot) und über ein beliebiges Protokoll (z.B. Bluetooth, WLAN oder ein Telefonieprotokoll), mit dem Identifikationsmittel 62 zusammenwirkenden Prozessor 22 eine Tür der Kabine 68 öffnen und sich in die Kabine 68 begeben (Schritt 102). Dabei kann der Prozessor 22 auf die lokale Kopie der Berechtigungsdatenbank im Speicher 74 oder, wenn die Kommunikationsverbindung vorhanden ist, auf die Berechtigungsdatenbank 42 zurückgreifen. Der Sender und Empfänger 66 ist vorzugsweise an einer oder mehreren der folgenden Positionen angebracht: an einer Aufstiege 84 zur Kabine 68, in der Kabine 68, an einem Werkzeugkasten und/oder einem Schließfach, in dem Dokumente (wie Fahrzeugpapiere) verwahrt werden. Mit dem Schritt 102 beginnt das Vorgehen auch, wenn für den Bediener 54 in der Vergangenheit ein Konto eingerichtet wurde (Schritt 100) und er die Arbeitsmaschine 10 zum wiederholten Male benutzt.

Nunmehr (Schritt 104) ist der Bediener 54 gegenüber dem Prozessor 22 identifiziert, wenn er die Tür mit dem Identifikationsmittel 62 geöffnet hat oder er identifiziert sich nun durch das Identifikationsmittel 62, das mit dem Sender und Empfänger 66 zusammenwirkt. Alternativ oder zusätzlich kann sich der Bediener 54 durch den Fingerabdrucksensor 52 identifizieren, wozu zuvor Daten hinsichtlich des Fingerabdrucks in die Berechtigungsdatenbank 42 und die lokale Kopie im Speicher 74 eingetragen wurden.

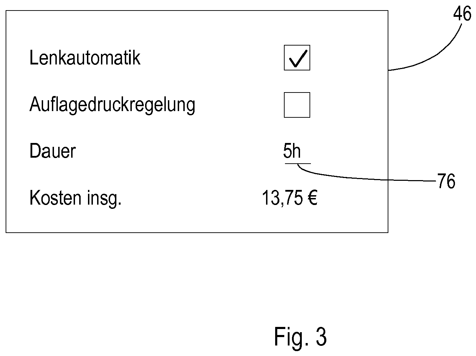

Nach dem Einschalten der Zündung der Arbeitsmaschine 10 folgt der Schritt 106, in dem der Prozessor 22 auf der Anzeigeeinrichtung 46 die dem jeweils gegenüber dem Prozessor 22 identifizierten Bediener 54 zugeordneten, freischaltbaren Funktionen angezeigt werden. Diese werden aus der lokalen Kopie der Berechtigungsdatenbank im Speicher 74 entnommen oder, wenn die Kommunikationsverbindung vorhanden ist, aus der Berechtigungsdatenbank 42 abgefragt. Im vorliegenden Ausführungsbeispiel kann es sich dabei um die erwähnten Funktionen der Lenkautomatik (Steuergerät 24) und der Auflagedruckregelung des Geräts 20 handeln. Der Bediener 54 kann über die Eingabeelemente der Bedienerschnittstelle 44, d.h. mit dem Joysticks 48 einen Cursor 76 (s. Figur 3) zu den angezeigten Funktionen bewegen und diese mit Tasten 50 auswählen oder abwählen. Zudem kann er optional die Zeitdauer eingeben oder auswählen, für welche diese Funktionen zur Verfügung stehen sollen. Ihm werden zugehörige Preise für die Nutzung der Funktionen angezeigt, vgl. Figur 3, in der die Lenkautomatik ausgewählt wurde (Kreuzchen gesetzt) und die Auflagedruckregelung nicht ausgewählt wurde (Kreuzchen nicht gesetzt), und die eingegebene Nutzungsdauer (5 Stunden) und zugehörige Kosten angezeigt werden. Nach einer weiteren Bestätigung ist oder sind eine oder mehrere Funktionen ausgewählt und die verbleibenden Funktionen abgewählt (Schritt 108).

Anschließend, Schritt 110, kann der Bediener 54 nur die ausgewählten Funktionen nutzen (Schritt 110), bis die spezifizierte Zeit abgelaufen ist (Schritt 112), worauf hin wieder auf den Schritt 106 zurückgegangen wird.

Wird der Betrieb der Arbeitsmaschine 10 jedoch endgültig beendet, wozu eine entsprechende Eingabe oder Bestätigung durch den Bediener mittels der Eingabeelemente der Bedienerschnittstelle 44 erfolgen kann (Schritt 114), sendet der Prozessor 22 Abrechnungsdaten (d.h. die ausgewählte Funktion und Zeitdauer und/oder die für die Nutzung der Funktionen angefallenen Kosten) an die Zentralstation 36, die anhand dieser Abrechnungsdaten regelmäßig das in der Berechtigungsdatenbank 42 abgespeicherte Konto des Bedieners 54 belastet. Dabei kann es sich auch um das Konto des Besitzers der Arbeitsmaschine 10 handeln. Das Vorgehen endet im Schritt 118.

### Mögliche Varianten

Anstelle im Schritt 106 nur die dem Bediener 54 zugeordneten Funktionen anzuzeigen, könnten dort alle verfügbaren Funktionen der Arbeitsmaschine 10 angezeigt werden. Dann würde auf den Schritt 108 noch anhand der Berechtigungsdatenbank 62 oder deren lokaler Kopie im Speicher 74 eine Prüfung darauf erfolgen, ob der Bediener 54 eine in ihm verfügbare Funktion ausgewählt hat oder nicht. Im zweiten Fall würde eine Fehlernachricht auf der Anzeigeeinrichtung 46 angezeigt und auf den Schritt 106 zurückgesprungen. Um derartige Fehler zu vermeiden, könnten die dem Bediener 54 nicht verfügbaren Funktionen im Schritt 106 zwar angezeigt, aber besonders gekennzeichnet, z.B. ausgegraut werden.

Der Bediener oder ein anderer Berechtigter kann (wenn ihm in der Berechtigungsdatenbank 42 eine entsprechende Berechtigung eingeräumt wurde) bei Bedarf weitere Funktionen hinzubuchen (d.h. deren Freischaltung ermöglichen), wie oben bezüglich dem Schritt 100 erläutert wurde. Dazu kann ggf. auf die Eingabeelemente der Bedienerschnittstelle 44 der Arbeitsmaschine 10 zurückgegriffen werden:
Anstelle auf die Identifikationsmittel 62 im Schlüssel 56 und/oder die Identifikation mit dem Fingerabdrucksensor 52 zurückzugreifen (oder zusätzlich dazu), könnte dem Bediener 54 ein mobiles Endgerät 78 (z.B. Mobiltelefon) zugeordnet sein, dessen Seriennummer oder beliebige andere, in einem Speicher davon abgelegte, einzigartige Daten oder Softwareapplikation in der Berechtigungsdatenbank 42 abgespeichert ist oder sind und durch den Prozessor 22 gelesen und mit der Berechtigungsdatenbank 42 verglichen werden, um den Bediener 54 zu identifizieren. Dieses Mobiltelefon 78 könnte, wenn es mit geeigneten Mitteln versehen ist, auch als Bedienerschnittstelle 44 mit Anzeigeeinrichtung 46 und Eingabeelement für den Prozessor 22 dienen. Bei einer noch anderen Ausführungsform wird dem Bediener 54 in der Berechtigungsdatenbank 42 ein einzigartiges Passwort zugeordnet, das er durch ein Eingabeelement der Bedienerschnittstelle 44 in den Prozessor 22 eingeben kann.

Anhand des identifizierten Bedieners 54 kann der Prozessor 22 auch bestimmte Bedienelemente und den Sitz in der Kabine 68 anhand von Daten aus der Berechtigungsdatenbank 42 benutzerspezifisch konfigurieren oder einstellen. Evtl. Änderungen werden registriert und an die Berechtigungsdatenbank 42 zurückgegeben, um sie auf einer zweiten Arbeitsmaschine 80 nutzen zu können.

Es wäre auch denkbar, dem Bediener 54 eine erste oder zweite Berechtigungsstufe zuzuordnen. Bei der ersten Berechtigungsstufe wird wie in der Figur 2 gezeigt vorgegangen, während die zweite Berechtigungsstufe vorsieht, das eine ausgewählte Funktion noch durch ein beabstandetes Endgerät 82 zu bestätigen ist.

Die Benutzungsberechtigung der freigeschalteten Funktion kann sich auch auf die zweite Arbeitsmaschine 80 erstrecken, wenn sich der Bediener 54 gegenüber deren Prozessor innerhalb der spezifizierten Zeitdauer identifiziert. Dann wird jedoch die Funktion auf der ersten Arbeitsmaschine 10 ausgeschaltet.

Die Berechtigungen des Bedieners 54 zur Nutzung vorgegebener Funktionen können sich auf alle oder in der Berechtigungsdatenbank 42 definierte Arbeitsmaschinen 10, 80 eines Maschinenparks beschränken. Auch kann der geographische Nutzungsbereich der Arbeitsmaschinen 10, 80 dem Bediener zugeordnet begrenzt werden. Weiterhin kann die maximale Fahrgeschwindigkeit der Arbeitsmaschine 10 durch die Berechtigungsdatenbank vorgegeben werden, insbesondere abhängig von der Führerscheinklasse des Bedieners 54. Der Prozessor 22 muss sich nicht an Bord der Arbeitsmaschine 10 befinden, sondern kann auf dem Gerät 20 oder im Abstand von Gerät 20 und Arbeitsmaschine 10 angeordnet sein und über Kommunikationsmittel damit kommunizieren. Beispielsweise könnte der Prozessor 20 in den Zentralrechner 40 integriert werden und über die Sende- und Empfangseinrichtungen 30 und 34 mit den an Bord der Arbeitsmaschine 10 bzw. dem Gerät befindlichen Gerätschaften kommunizieren.

Schließlich sei angemerkt, dass dem Identifikationsmittel 62 in der Berechtigungsdatenbank 42 bestimmte Funktionalitäten zugeordnet sein können, die der Prozessor 22 freischaltet, ohne dass der Bediener 54 eine Freischaltung über die Bedienerschnittstelle 44 durchführen müsste. Hierbei kann es sich um Funktionen handeln, die standardmäßig zum Betrieb der Arbeitsmaschine 10 benötigt werden, wie Ernteeinrichtungen an selbstfahrenden Erntemaschinen, die aber bestimmten Bedienern wie nur zum Fahren autorisiertem Personal nicht zur Verfügung stehen sollen. Die jeweiligen Verfügbarkeiten der Funktionen (immer verfügbar oder erste oder zweite Berechtigungsstufe) für den Bediener 54 könnten in der Berechtigungsdatenbank 42 auch auftragspezifisch festgelegt werden.

## Patentansprüche

1. Anordnung zur Kontrolle von Funktionen einer Arbeitsmaschine (10), umfassend:
ein elektronisch lesbares Identifikationsmittel (62), das einem Bediener (54) der Arbeitsmaschine (10) zugeordnet ist,
eine durch den Bediener (54) betätigbare Bedienerschnittstelle (44),
einen mit der Bedienerschnittstelle (44) verbundenen oder verbindbaren, der Arbeitsmaschine (10) zugeordneten Prozessor (22), und
wenigstens eine Einrichtung der Arbeitsmaschine (10) und/oder eines der Arbeitsmaschine (10) zugehörigen Geräts (20), deren Funktion durch den Prozessor (22) ein- und ausschaltbar ist,
wobei der Prozessor (22) programmiert ist, das Identifikationsmittel (62) auszulesen und über die Bedienerschnittstelle (44) eine Eingabe und/oder Auswahl einer gewünschten, in einer abgespeicherten Berechtigungsdatenbank (42) dem Identifikationsmittel (62) zugeordneten Funktion der Einrichtung zu erhalten,
**dadurch gekennzeichnet, dass** in der Berechtigungsdatenbank (42) dem Identifikationsmittel (62) zugeordnete Berechtigungen zur Freischaltung der Einrichtung abgespeichert sind,
dass der Prozessor (22) programmiert ist, auf die Eingabe und/oder Auswahl der gewünschten Funktion hin die gewünschte Funktion für eine begrenzte, festgelegte oder mittels der Bedienerschnittstelle (44) spezifizierbare Zeitdauer freizuschalten und die Benutzung der Einrichtung durch den Bediener zu ermöglichen, falls in der Berechtigungsdatenbank (42) eine der gewünschten Funktion zugeordnete Berechtigung eingetragen ist,
dass die Berechtigungsdatenbank (42) auf einem von der Arbeitsmaschine (10) beabstandeten Zentralrechner (40) abgespeichert ist, der mit dem Prozessor (22) in drahtloser, bidirektionaler Kommunikationsverbindung steht,
und dass der Prozessor (22) programmiert ist, an den Zentralrechner (40) einen Datensatz hinsichtlich der ausgewählten Funktion und ggf. der spezifizierten Zeitdauer und/oder zugehöriger Kosten zu übersenden und der Zentralrechner (40) programmiert ist, anhand des empfangenen Datensatzes Abrechnungsdaten für die ausgewählte Freischaltung zu erstellen.

2. Anordnung nach Anspruch 1, wobei der Prozessor (22) mit einem lokalen Speicher (74) verbunden ist, auf dem eine lokale Kopie der Berechtigungsdatenbank (42) abgelegt ist.

3. Anordnung nach Anspruch 1 oder 2, wobei das Auslesen der dem Identifikationsmittel (62) zugeordneten Berechtigung aus der Berechtigungsdatenbank (42) durch den Zentralrechner (40) oder, insbesondere bei temporär nicht verfügbarer Kommunikationsverbindung, durch den Prozessor (22) erfolgt.

4. Anordnung nach einem der Ansprüche 1 bis 3, wobei in der Berechtigungsdatenbank (42) verschiedene Berechtigungsstufen abgelegt sind, wobei eine erste Berechtigungsstufe den Bediener (54) autorisiert, eine oder mehrere bestimmte oder sämtliche vorhandenen Funktionen der Arbeitsmaschine (10) direkt freizuschalten und eine zweite Berechtigungsstufe den Bediener (54) nur autorisiert, über den Prozessor (22) und/oder Zentralrechner (40) eine Anfrage hinsichtlich einer vom Bediener (54) eingegebenen, gewünschten Funktion an eine beabstandetes Ein- und Ausgabegerät (82) zu übersenden und der Prozessor (22) programmiert ist, die gewünschte Funktion nur dann freizuschalten, nachdem am beabstandete Ein- und Ausgabegerät (82) eine positive Antwort eingegeben wurde.

5. Anordnung nach einem der Ansprüche 1 bis 4, wobei einer zweiten Arbeitsmaschine (80) ein zweiter Prozessor (22) zugeordnet ist, der mit einer Bedienerschnittstelle (44) und dem Zentralrechner (40) verbunden oder verbindbar ist und eine auf einer ersten Arbeitsmaschine (10) freigeschaltete Funktion durch das Identifikationsmittel (62) auch auf der zweiten Arbeitsmaschine (80) nutzbar ist.

6. Anordnung nach einem der Ansprüche 1 bis 5, wobei die Berechtigungsdatenbank (42) durch eine berechtigte Person nach Eingabe einer Autorisierung unter Verwendung von Fernkommunikationsmitteln, insbesondere über eine Mobilfunk- oder Internet-Verbindung, änderbar ist.

7. Anordnung nach einem der Ansprüche 1 bis 6, wobei die freischaltbare Funktion der Arbeitsmaschine (10) eine oder mehrere der folgenden ist oder sind: automatisierte Lenkung der Arbeitsmaschine (10) anhand eines satellitengestützten Navigationssystems mit oder ohne Korrektursignal, automatisierte Lenkung der Arbeitsmaschine (10) mittels sensorisch erfasstem Pfad, Synchronisierung von Position und Weg mehrerer Arbeitsmaschinen (10, 80), positionsbasierte Betätigung von Funktionen der Arbeitsmaschine (10) und/oder des Geräts am Vorgewende, Traktor-Anbaugeräte-Automatisierung, variable Applikationsraten, Reihensynchronisierung, Zugänglichkeit von physischen oder elektronischen Benutzer- und/oder Reparaturhandbüchern, Berechtigung zum online-Bestellen von Betriebsstoffen und/oder Ersatzteilen für die Arbeitsmaschine (10) über die Bedienerschnittstelle, Teilbreiten- bzw. Einzelreihenschaltung basierend auf Karten und Informationen über die Fahrzeug bzw. Arbeitsgeräteposition, Zugang zu verschließbaren Behältnissen der Arbeitsmaschine (10), maximale Fahrgeschwindigkeit der Arbeitsmaschine (10) auf dem Feld und/oder der Straße, geographischer Nutzungsbereich der Arbeitsmaschine (10), verfügbare Motorleistung der Arbeitsmaschine (10), Ingangsetzen des Motors der Arbeitsmaschine (10), Fahren der Arbeitsmaschine (10), benutzerspezifische Konfiguration von Bedienelementen und/oder des Arbeitsplatzes in der Arbeitsmaschine (10), Einschalten einer Klimaanlage, Einschalten von Unterhaltungselektronik an Bord der Arbeitsmaschine (10) und/oder Einschalten von Kommunikationsmitteln der Arbeitsmaschine (10) und/oder des Geräts (20), die eine Betätigung oder Aktivierung einer stationären Einrichtung, z.B. zum Öffnen und Schließen eines Tores oder zum Freischalten einer Betätigung einer Zapfsäule, ermöglichen und/oder Einräumung einer Berechtigung der Identifikationsmittel (62) für eine Betätigung oder Aktivierung einer stationären Einrichtung.

8. Anordnung nach einem der Ansprüche 1 bis 7, wobei das elektronisch auslesbare Identifikationsmittel (62) eines oder mehrere folgender ist: ein Speicherchip, ein körperliches Merkmal des Bedieners, ein in die Bedienerschnittstelle eingebbares Passwort und/oder ein auf einem tragbaren Endgerät abgespeichertes Passwort oder andere dort abgespeicherte Daten oder Programme, z.B. dessen Seriennummer oder eine Software-Applikation.

## Claims

1. Arrangement for controlling functions of a work machine (10), comprising:
an electronically readable identification means (62) which is assigned to an operator (54) of the work machine (10),
an operator interface (44) which can be actuated by the operator (54),
a processor (22) which is assigned to the work machine (10) and is connected or can be connected to the operator interface (44), and
at least one device of the work machine (10) and/or of a unit (20) associated with the work machine (10), the function of which can be switched on and off by the processor (22),
wherein the processor (22) is programmed to read the identification means (62) and to receive, via the operator interface (44), an input and/or selection of a desired function of the device which is assigned to the identification means (62) in a stored authorization database (42),
**characterized in that** authorizations which are assigned to the identification means (62) and are intended to enable the device are stored in the authorization database (42),
**in that** the processor (22) is programmed to enable the desired function, for a period which is limited, stipulated or can be specified by means of the operator interface (44), in response to the input and/or selection of the desired function and to make it possible for the device to be used by the operator if an authorization assigned to the desired function is entered in the authorization database (42),
**in that** the authorization database (42) is stored on a central computer (40) which is at a distance from the work machine (10) and has a wireless, bidirectional communication connection to the processor (22),
and **in that** the processor (22) is programmed to transmit a data record with regard to the selected function and possibly the specified period and/or associated costs to the central computer (40), and the central computer (40) is programmed to create billing data for the selected enabling on the basis of the received data record.

2. Arrangement according to Claim 1, wherein the processor (22) is connected to a local memory (74) which stores a local copy of the authorization database (42).

3. Arrangement according to Claim 1 or 2, wherein the authorization assigned to the identification means (62) is read from the authorization database (42) by the central computer (40) or, in particular if a communication connection is temporarily not available, by the processor (22).

4. Arrangement according to one of Claims 1 to 3, wherein different authorization levels are stored in the authorization database (42), wherein a first authorization level authorizes the operator (54) to directly enable one or more particular functions or all available functions of the work machine (10) and a second authorization level authorizes the operator (54) to only transmit a request with respect to a desired function input by the operator (54) to an input and output device (82) which is at a distance via the processor (22) and/or the central computer (40), and the processor (22) is programmed to enable the desired function only after a positive response has been input on the input and output device (82) which is at a distance.

5. Arrangement according to one of Claims 1 to 4, wherein a second processor (22) is assigned to a second work machine (80) and is connected or can be connected to an operator interface (44) and to the central computer (40), and a function enabled on a first work machine (10) can also be used on the second work machine (80) by means of the identification means (62).

6. Arrangement according to one of Claims 1 to 5, wherein the authorization database (42) can be changed by an authorized person, after an authorization has been input, using remote communication means, in particular via a mobile radio or Internet connection.

7. Arrangement according to one of Claims 1 to 6, wherein the function of the work machine (10) which can be enabled is one or more of the following: automated steering of the work machine (10) on the basis of a satellite-based navigation system with or without a correction signal, automated steering of the work machine (10) by means of a path captured using sensors, synchronization of the position and travel of a plurality of work machines (10, 80), position-based actuation of functions of the work machine (10) and/or of the unit on the headland, tractor attachment automation, variable application rates, row synchronization, accessibility of physical or electronic user and/or repair handbooks, authorization to order operating materials and/or spare parts for the work machine (10) online via the operator interface, part-width section or single row control based on maps and information relating to the vehicle or work unit position, access to closable containers of the work machine (10), maximum travel speed of the work machine (10) on the field and/or the road, geographical area of use of the work machine (10), available engine power of the work machine (10), starting of the engine of the work machine (10), driving of the work machine (10), user-specific configuration of operating elements and/or of the workplace in the work machine (10), switching-on of an air-conditioning system, switching-on of entertainment electronics on board the work machine (10) and/or switching-on of communication means of the work machine (10) and/or of the unit (20) which make it possible to actuate or activate a stationary device, for example for the purpose of opening and closing a gate or for enabling actuation of a fuel pump, and/or granting of an authorization of the identification means (62) for actuating or activating a stationary device.

8. Arrangement according to one of Claims 1 to 7, wherein the electronically readable identification means (62) is one or more of the following: a memory chip, a physical feature of the operator, a password which can be input to the operator interface and/or a password stored on a portable terminal or other data or programs stored there, for example the serial number thereof or a software application.

## Revendications

1. Arrangement pour contrôler les fonctions d'une machine de travail (10), comprenant :
un moyen d'identification (62) lisible électroniquement qui est associé à un opérateur (54) de la machine de travail (10),
une interface d'opérateur (44) pouvant être actionnée par l'opérateur (54),
un processeur (22) associé à la machine de travail (10) et connecté ou pouvant être connecté à l'interface d'opérateur (44), et
au moins un dispositif de la machine de travail (10) et/ou d'un appareil (20) appartement à la machine de travail (10) dont la fonction peut être activée et désactivée par le processeur (22),
le processeur (22) étant programmé pour lire le moyen d'identification (62) et recevoir, par le biais de l'interface d'opérateur (44), une saisie et/ou une sélection d'une fonction souhaitée du dispositif associée au moyen d'identification (62) dans une base de données d'autorisations (42) enregistrée,
**caractérisé en ce que** des autorisations de libération du dispositif, associées au moyen d'identification (62), sont enregistrées dans la base de données d'autorisations (42),
**en ce que** le processeur (22) est programmé, lors de la saisie et/ou de la sélection de la fonction souhaitée, pour libérer la fonction souhaitée pendant une durée limitée, fixée ou pouvant être spécifiée au moyen de l'interface d'opérateur (44) et rendre possible l'utilisation du dispositif par l'utilisateur dans le cas où une autorisation associée à la fonction souhaitée est consignée dans la base de données d'autorisations (42),
**en ce que** la base de données d'autorisations (42) est enregistrée sur un ordinateur central (40) distant de la machine de travail (10), lequel se trouve en liaison de communication bidirectionnelle sans fil avec le processeur (22),
et **en ce que** le processeur (22) est programmé pour envoyer à l'ordinateur central (40) un jeu de données concernant la fonction sélectionnée et, le cas échéant, la durée spécifiée et/ou les coûts associés et l'ordinateur central (40) est programmé pour créer, à l'aide du jeu de données reçu, des données de facturation pour la libération sélectionnée.

2. Arrangement selon la revendication 1, le processeur (22) étant relié à une mémoire locale (74) sur laquelle est stockée une copie locale de la base de données d'autorisations (42).

3. Arrangement selon la revendication 1 ou 2, la lecture de l'autorisation associée au moyen d'identification (62) depuis la base de données d'autorisations (42) étant effectuée par l'ordinateur central (40) ou, notamment dans le cas d'une liaison de communication temporairement indisponible, par le processeur (22).

4. Arrangement selon l'une des revendications 1 à 3, différents niveaux d'autorisation étant stockés dans la base de données d'autorisations (42), un premier niveau d'autorisation autorisant l'opérateur (54) à libérer directement une ou plusieurs fonctions définies ou la totalité des fonctions présentes de la machine de travail (10) et un deuxième niveau d'autorisation n'autorisant l'opérateur (54) qu'à transmettre à un appareil d'entrée et de sortie (82) distant, par le biais du processeur (22) et/ou de l'ordinateur central (40), une demande concernant une fonction souhaitée saisie par l'opérateur (54) et le processeur (22) étant programmé pour ne libérer la fonction souhaitée qu'après la saisie d'une réponse positive au niveau de l'appareil d'entrée et de sortie (82) distant.

5. Arrangement selon l'une des revendications 1 à 4, un deuxième processeur (22) étant associé à une deuxième machine de travail (80), lequel est relié ou peut être relié à une interface d'opérateur (44) et à l'ordinateur central (40) et une fonction libérée sur une première machine de travail (10) pouvant également être utilisée par le moyen d'identification (62) sur la deuxième machine de travail (80).

6. Arrangement selon l'une des revendications 1 à 5, la base de données d'autorisations (42) pouvant être modifiée par une personne autorisée après la saisie d'une autorisation en utilisant des moyens de communication à distance, notamment par le biais d'une connexion radioélectrique mobile ou Internet.

7. Arrangement selon l'une des revendications 1 à 6, la fonction libérable de la machine de travail (10) étant une ou plusieurs des suivantes : direction automatisée de la machine de travail (10) à l'aide d'un système de navigation assisté par satellite avec ou sans signal de correction, direction automatisée de la machine de travail (10) au moyen d'un trajet acquis par détection, synchronisation de la position et de la course de plusieurs machines de travail (10, 80), actionnement basé sur la position de fonctions de la machine de travail (10) et/ou de l'appareil au niveau de la tournière, automatisation des outils portés par le tracteur, taux d'application variables, synchronisation de rangées, accessibilité des manuels d'utilisateur et/ou de réparation physiques ou électroniques, autorisation de commande en ligne de consommables et/ou de pièces de rechange pour la machine de travail (10) par le biais de l'interface d'opérateur, commutation de largeurs partielles ou de rangées individuelles sur la base de cartes et d'informations à propos du véhicule ou de la position des appareils de travail, accès aux récipients verrouillables de la machine de travail (10), vitesse de déplacement maximale de la machine de travail (10) sur le champ et/ou la route, domaine d'utilisation géographique de la machine de travail (10), puissance de moteur disponible de la machine de travail (10), mise en service du moteur de la machine de travail (10), déplacement de la machine de travail (10), configuration spécifique à l'utilisateur des éléments de commande et/ou du poste de travail dans la machine de travail (10), mise en marche d'un climatiseur, mise en marche de l'électronique de divertissement à bord de la machine de travail (10) et/ou mise en marche de moyens de communication de la machine de travail (10) et/ou de l'appareil (20), lesquels rendent possible un actionnement ou une activation d'un dispositif fixe, par exemple pour ouvrir et fermer une porte ou pour libérer un actionnement d'un distributeur d'essence et/ou aménagement d'une autorisation du moyen d'identification (62) pour un actionnement ou une activation d'un dispositif fixe.

8. Arrangement selon l'une des revendications 1 à 7, le moyen d'identification (62) lisible électroniquement étant un ou plusieurs des éléments suivants : une puce de mémoire, une caractéristique corporelle de l'opérateur, un mot de passe pouvant être saisi sur l'interface d'opérateur et/ou un mot de passe enregistré sur un terminal portable ou d'autres données ou programmes qui y sont enregistrés, par exemple son numéro de série ou une application logicielle.
